# EUROPÄISCHE PATENTSCHRIFT

(11) **EP 2 215 640 B1**
(45) Veröffentlichungstag und Bekanntmachung des Hinweises auf die Patenterteilung: **23.03.2011**
(21) Anmeldenummer: 08804377.3
(22) Anmeldetag: 18.09.2008
(51) Int. Cl.: H01F 7/06

(54) **MAGNETBAUGRUPPE EINES MAGNETVENTILS**
MAGNET ASSEMBLY FOR A SOLENOID VALVE
MODULE MAGNÉTIQUE POUR UNE SOUPAPE MAGNÉTIQUE

(30) Priorität: 30.10.2007 DE 102007052204
(43) Veröffentlichungstag der Anmeldung: 11.08.2010
(73) Patentinhaber: Robert Bosch GmbH, 70442 Stuttgart (DE)
(72) Erfinder: HERWIG, Roland, 74354 Besigheim (DE); ROEHR, Dieter, 96132 Schluesselfeld (DE); DIRSCHERL, Florian, 96049 Bamberg (DE); IKIZALP, Gueray, 96050 Bamberg (DE); SCHAICH, Udo, 70378 Stuttgart (DE); SOMMER, Thomas, 96049 Bamberg (DE); HOHE, Thomas, 96047 Bamberg (DE); YILMAZER, Cetin, 96052 Bamberg (DE)
(86) Internationale Anmeldenummer: PCT/EP2008/062437
(87) Internationale Veröffentlichungsnummer: WO 2009/056396

(56) Entgegenhaltungen:
- WO-A-01/50484
- DE-A1- 1 539 731
- DE-A1- 3 834 445
- DE-A1- 4 242 238
- DE-A1- 19 714 812
- DE-A1-102005 002 796
- DE-A1-102007 002 758

## Beschreibung

### Stand der Technik

DE 196 50 865 A1 bezieht sich auf ein Magnetventil zur Steuerung des Kraftstoffdruckes in einem Steuerraum eines Einspritzventiles, etwa eines Common-Rail-Einspritzsystems, zur Versorgung von selbstzündenden Verbrennungskraftmaschinen mit Kraftstoff. Über den Kraftstoffdruck im Steuerraum wird eine Hubbewegung eines Ventilkörpers gesteuert, mit dem eine Einspritzöffnung des Einspritzventiles geöffnet oder geschlossen wird. Das Magnetventil umfasst einen Elektromagneten, einen beweglichen Anker und ein mit dem Anker bewegtes und von einer Ventilschließfeder in Schließrichtung beaufschlagtes Ventilglied, das mit dem Ventilsitz des Ventilgliedes zusammenwirkend den Kraftstoffausstoß aus dem Steuerraum steuert.

Es ist ein Common-Rail-Kraftstoffinjektor mit einem zweiteiligen Anker bekannt, der durch ein Magnetventil betätigt wird. Der Anker übt im stromlosen Fall die Schließkraft auf eine Ventilkugel aus. Wenn der Elektromagnet bestromt wird, bewegt sich der Anker um den Ankerhub nach oben, entgegen der auf die Ventilkugel wirkenden Schließkraft, und ein Abströmventil öffnet. Eine Ankerführung, die fest im Injektorkörper des Kraftstoffinjektors verschraubt ist, nimmt den Ankerbolzen auf. Auf dem Ankerbolzen wird die Ankerplatte geführt, die ihrerseits vom Elektromagneten angezogen wird. Der Ankerbolzen kann aufgrund des Führungsspieles in der Ankerführung kippen. Die Ankerplatte ihrerseits kann auf dem Ankerbolzen verkippen, so dass sich die Gesamtkippung der Baugruppe Ankerbolzen/Ankerplatte in Bezug auf die Injektorhauptachse als Summe der Führungsspiele bestimmen lässt.

WO 03/038844 Al bezieht sich auf einen massereduzierten Magnetspulenträger. Es wird eine Magnetanordnung vorgeschlagen, die eine Magnetspule umfasst, die von einem Magnettopf umgeben ist. Die Magnetspule ist mit Kontaktfahnen elektrisch leitend verbunden. Ein Zwischenraum zwischen der Außenseite der Magnetspule und der Innenseite des Magnettopfes ist derart ausgebildet, dass in diesem ein fließfähiges Material vergießbar ist. Die Magnetspule ist von einem dünnwandigen Spulenträger umgeben, an welchem röhrenförmige Kontaktführungselemente angeformt sind. Der dünnwandig ausgebildete Spulenträger ist aus einem mit mineralischen Füllstoffen versetzten, temperaturbeständigen Kunststoffmatterial gefertigt.

DE 197 14 812 Al bezieht sich auf eine Magnetspule. Die Magnetspule ist von einem Wicklungsdraht gebildet, der auf einem Wicklungsträger aufgewickelt ist. Eine derartige Magnetspule kommt unter anderem in Magnetventilen zum Einsatz, die in Kraftstoffpumpen von Brennkraftmaschinen zur Steuerung der Fördermenge und des Förderverlaufes eingesetzt werden. Im Betrieb werden die Magnetventile zumindest teilweise von mit Hochdruck beaufschlagtem Kraftstoff umströmt. Um einen Kontakt mit dem Kraftstoff zu vermeiden, ist es erforderlich, die Magnetspule zu kapseln. Insbesondere bei Common-Rail-Kraftstoffeinspritzanlagen oder Pumpe-Düse-Einheiten werden Magnetventile mit extrem kurzen Schaltzeiten benötigt. Die kurzen Schaltzeiten führen dazu, dass sich die Magnetspule im Betrieb erwärmt und daher für eine Wärmeableitung an der Magnetspule Sorge zu tragen ist, da deren thermische Belastung im Betrieb ungünstig ist.

### Offenbarung der Erfindung

Es wird vorgeschlagen, eine Kontaktierung der Magnetspule eines Magnet-ventils über eine stoffschlüssige Verbindung zu realisieren. Der erfindungsgemäße Einsatz der Klebetechnik zudiechunzwech erlaubt es, Bauraum einzusparen sowie das eine stoffschlüssige Verbindung herstellende Medium zur Abdichtung von sich einstellenden Leckagepfaden zu nutzen. Über eine als stoffschlüssige Verbindung ausgebildete Spulenkontaktierung, die als Klebschicht mit dem Gehäuse der Magnetbaugruppe verbunden ist, kann eine Abdichtung realisiert werden.

Bei bisher eingesetzten O-Ringen zur Durchführung und Abdichtung der Magnetspulenkontaktierungen oder bei Einsatz von Glaseinschmelzungen ist mehr Bauraum erforderlich, der bei Einsatz der erfindungsgemäß vorgeschlagenen Lösung reduziert werden kann. Insbesondere kann durch die Ausbildung einer Klebschicht an der Spulenkontaktierungsdurchführung eine verbesserte Abdichtwirkung erzielt werden.

Die Verbesserung der Abdichtwirkung beruht bei Ausführung einer Verklebung auf der Verbindung der Fügepartner mit dem das Dichtelement darstellenden Klebermaterial. Zur Abdichtung ist ein Anpressen des Dichtelementes auf die Fügepartner nicht erforderlich. Eine daraus resultierende Gefahr einer Minimierung der Dichtwirkung aufgrund einer sich einstellenden Relaxation des Dichtelementes über die Lebenszeit - wie bei Einsatz eines O-Rings - liegt nicht mehr vor. Damit wird die Sicherheit der Abdichtwirkung über die Standzeit der Magnetbaugruppe erhöht. Zusätzlich wird ein Konus, der bei der Verwendung von Glaseinschmelzungen zur Erzeugung der Anpresskraft eingesetzt wird, überflüssig. Die kostenintensive Herstellung des Konus sowie der als kritisch einzustufende Einpressprozess können entfallen. Des Weiteren können Montagehilfen wie zum Beispiel Einführschrägen entfallen. Die Produktkosten werden minimiert, und die Prozesssicherheit durch Entfall als kritisch einzustufender Prozessschritt erhöht.

Des Weiteren ist bei der Ausbildung einer stoffschlüssigen Verbindung, wie der erfindungsgemäßen Klebeverbindung, hervorzuheben, dass sich der eingesetzte Klebstoff der Oberfläche der Fügepartner anpasst. Riefen oder ähnliche Unstetigkeiten werden durch den Klebstoff verfüllt. Rillen, die sich vom Innenraum zum Außenraum erstrecken und die bei Einsatz von O-Ring-Abdichtungen Probleme bereiten können, können keine kritischen Leckagepfade mehr darstellen, da sie durch das in diesem Falle als Abdichtmedium wirkende Klebemedium verfüllt werden. Leckagepfade werden durch die erfindungsgemäß vorgeschlagene Lösung minimiert. Als Folge daraus können die Anforderungen an die Oberflächenbeschaffenheit der Dichtfläche reduziert werden, was wiederum eine Kostenreduzierung im Fertigungsprozess darstellt.

Da zur Abdichtung mittels Klebstoff nur ein relativ geringer radialer Spalt von ca. 150 µm benötigt wird, können die Durchgangsbohrungen im Gehäuse der Magnetbaugruppe im Vergleich zu den bisher eingesetzten Lösungen kleiner gewählt werden. Für den Kraftstoffinjektor bedeutet dies, dass einerseits der Bauraum reduziert ist und andererseits die Festigkeit des Grundkörpers weniger stark beeinträchtigt wird. Ineinander verschränkte Bohrungen, die im Inneren des Injektorkörpers des Kraftstoffinjektors verlaufen, können bei Einsatz der erfindungsgemäß vorgeschlagenen Lösung leichter umgesetzt werden. Damit ist gemeint, dass der Freiheitsgrad hinsichtlich der Wahl der Verschränkungswinkel größer wird und der Injektorkörper massiver baut, was dessen Hochdruckfestigkeit günstig beeinflusst.

Das Gleiche gilt für den in axialer Richtung benötigten Bauraum. Je kürzer ein Kraftstoffinjektor baut, desto günstiger ist dies hinsichtlich der am Zylinderkopf einer Verbrennungskraftmaschine herrschenden Platzverhältnisse beziehungsweise der Tiefe, in welcher die die Kraftstoffinjektoren aufnehmenden Bohrungen im Zylinderkopf der Verbrennungskraftmaschine zu fertigen sind.

Durch eine Anpassung der Schichtdicke des Klebstoffes beziehungsweise des Klebemediums, der Klebelänge und der Oberfläche der miteinander zu fügenden Fügepartner ist es der erfindungsgemäß vorgeschlagenen Lösung folgend, vergleichsweise einfach möglich, das Dichtelement "Klebstoffschicht" an geänderte Druckverhältnisse anzupassen. Dies bedeutet, dass die erfindungsgemäß vorgeschlagene Spulenkontaktierung mittels einer stoffschlüssigen Verbindung sowohl im Niederdruckbereich als auch im Hochdruckbereich eingesetzt werden kann.

Als durchführendes, die Magnetspule kontaktierendes Element sind neben den bisher eingesetzten Kontaktierungspins auch formlabile Kabel beziehungsweise Drähte einsetzbar. Die erfindungsgemäß vorgeschlagene Lösung erlaubt eine Erweiterung der konstruktiven und fertigungstechnischen Freiräume hinsichtlich des Einsatzes dieser formlabil ausgebildeten Kabel beziehungsweise Drähte. So lassen sich beispielsweise Kraftstoffinjektoren mit einer radialen, anstatt der bisher eingesetzten axialen Ausrichtung der Spulenkontaktierung beziehungsweise der Durchführungen, die hierfür erforderlich sind, darstellen. Die Durchführung wird an die vorhandenen Freiräume angepasst.

Darüber hinaus erlaubt die erfindungsgemäß vorgeschlagene Ausbildung einer stoffschlüssigen Verbindung zwischen einem Kontaktierungspin beziehungsweise einem formlabilen Kabel beziehungsweise Draht mit dem Gehäuse der Magnetbaugruppe eine Reduktion der Teileanzahl. Des Weiteren wird die Durchführung hinsichtlich ihrer Geometrie und der O-berflächenrauigkeit günstig beeinflusst. Schließlich werden die zur Montage notwendigen Prozessschritte minimiert und dadurch die Produktkosten gesenkt.

### Kurze Beschreibung der Zeichnungen

Anhand der Zeichnung wird die Erfindung nachstehend eingehender beschrieben.

Es zeigt:
- Figur 1: den bisherigen Aufbau einer Magnetbaugruppe insbesondere zur Betätigung eines Kraftstoffinjektors,
- Figur 2: eine Schnittdarstellung der erfindungsgemäß vorgeschlagenen Lösung für eine Magnetbaugruppe zur Betätigung eines Kraftstoffinjektors, und
- Figur 3: eine perspektivische Ansicht einer teilweise aufgebrochen dargestellten Magnet- baugruppe gemäß Figur 2.

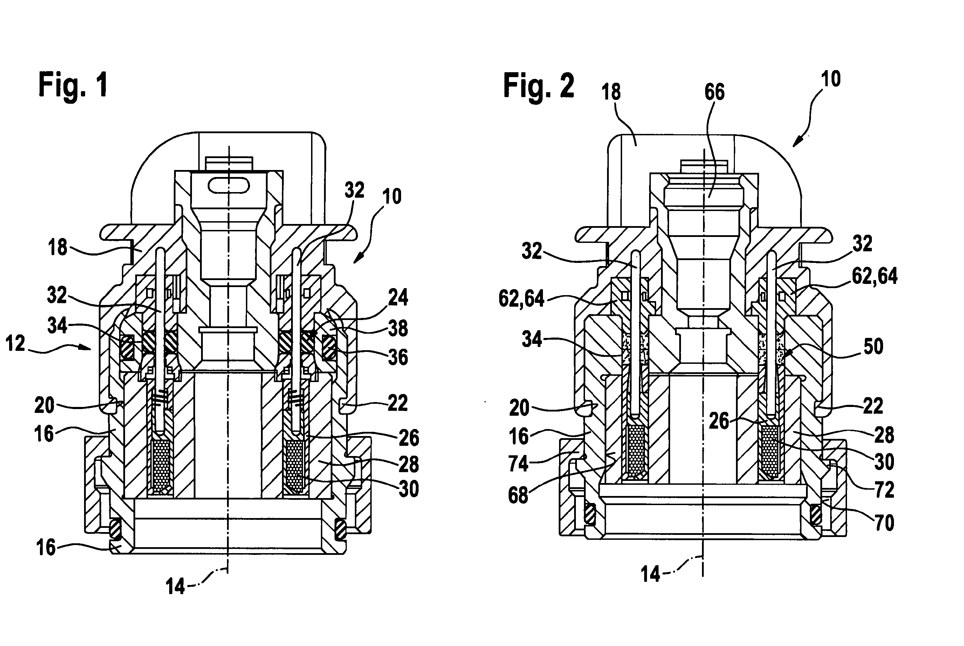

Figur 1 zeigt eine Magnetbaugruppe 10, die ein Gehäuse 12 umfasst. Das Gehäuse 12 besteht aus einer Magnethülse 16 und einem Deckel 18. Die Magnetbaugruppe 10 ist - abgesehen vom Deckel 18 - symmetrisch zu einer Achse 14 aufgebaut. In der Mantelfläche der Magnethülse 16 verläuft eine Ringnut 20, in welche ein Rastring 22 des Deckels 18 eingreift.

In der Magnethülse 16 ist ein Magnetkern 28 aufgenommen, in welchen eine Magnetspule 26 eingebettet ist. Die Magnetspule 26 wird über Kontaktierungspins 32 bestromt. Die Kontaktierungspins 32 sind durch Durchführungen 34 eines Gehäuseteiles 38 geführt. Die O-Ringe 24 dichten jeweils die Kontaktierungspins 32 in den Durchführungen 34 des Gehäuseteils 38 ab.

Aus der Darstellung gemäß Figur 1 geht hervor, dass jeweils ein O-Ring 24 in die Durchführung 34 im Gehäuseteil 38 eingepasst ist. Die O-Ringe 24, die gemäß der Lösung in Figur 1 eingesetzt werden, neigen zur Relaxation, so dass die Dichtwirkung über die Lebenszeit der Magnetbaugruppe 10 gesehen abnimmt und Leckagepfade entstehen.

### Ausführungsformen

Der Darstellung gemäß Figur 2 ist ein Schnitt durch die erfindungsgemäß vorgeschlagene Gestaltung der Magnetbaugruppe eines Magnetventils zu entnehmen.

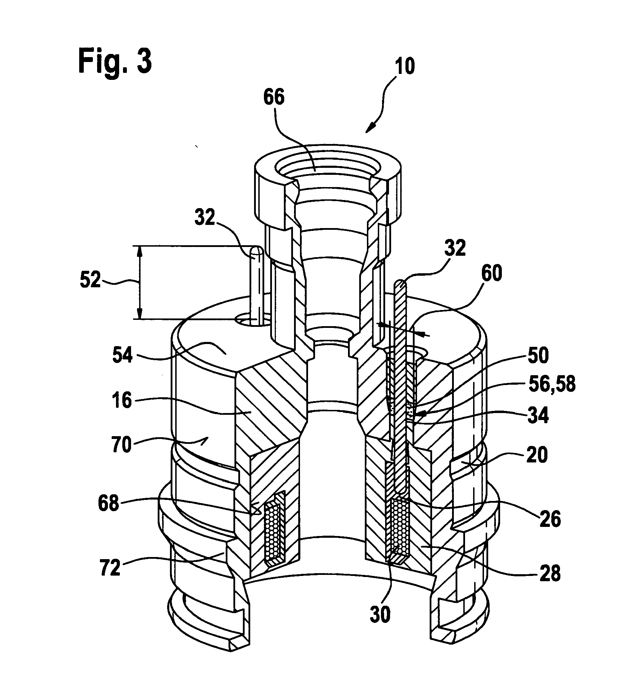

Wie aus der Darstellung gemäß Figur 2 hervorgeht, umfasst die Magnetbaugruppe 10 die Magnethülse 16, welche durch den Deckel 18 verschlossen ist. Der Deckel 18 ist mit einem Rastring 22 in einer Ringnut 20 an der Außenumfangsfläche der Magnethülse 16 formschlüssig aufgenommen. In der Magnethülse 16 der Magnetbaugruppe 10 gemäß der Darstellung in Figur 2 befindet sich der Magnetkern 28, in welchen die Magnetspule 26 eingebettet ist. Die Magnetspule 26 umfasst eine Vielzahl von Wicklungsdrähten 30, die über elektrische Kontaktelemente, die zum Beispiel als Kontaktierungspins 32 ausgeführt sein können, bestrombar sind. Wie aus der Schnittdarstellung gemäß Figur 2 hervorgeht, erstrecken sich die elektrischen Kontaktelemente 32 durch Durchführungen 34 in der Magnethülse 16. Im Vergleich zur Darstellung gemäß Figur 1 sind die Durchführungen 34 in einem reduzierten Durchmesser 60, vergleiche perspektivische Wiedergabe in Figur 3, ausgebildet. Die Abdichtung zwischen den elektrischen Kontaktierungselementen 32 in der Durchführung 34 der Magnethülse 16 wird über eine stoffschlüssige Verbindung 50 herbeigeführt. Die stoffschlüssige Verbindung 50 wird durch einen viskosen Klebstoff- um ein Beispiel zu nennen - dargestellt, der nach Einbringen in den Spalt zwischen den elektrischen Kontaktelementen 32 und der Begrenzungswand der Durchführungen 34 durch ein geeignetes Härtungsverfahren ausgehärtet wird. Durch eine angepasste Prozessführung bei der Abdichtung wird sichergestellt, dass der Spalt einschließlich eventuell vorhandener Unstetigkeiten, wie zum Beispiel Riefen oder Dellen und dergleichen, blasenfrei verfüllt wird. Die Aushärtung erfolgt im Härtungsverfahren abhängig vom Klebstoff entweder durch Wärme, durch Luftabschluss, durch UV-Strahlung oder weitere Mechanismen. Alternativ zu viskosen Klebstoffen können zur Vereinfachung der Prozessabläufe bei geeigneter geometrischer Ausbildung der Dichtgeometrie zwischen den elektrischen Kontaktierungselementen 32 und der Begrenzungswand der Durchführung 34 aufschmelzende Klebstoffe oder auch vorkonfektionierte Klebebänder eingesetzt werden. Der Klebstoff, aus welchem die stoffschlüssige Verbindung 50 zwischen den elektrischen Kontaktierungselementen 32 und der Begrenzungswand der Durchführungen 34 gefertigt wird, richtet sich nach den Eigenschaften des abzudichtenden Mediums, sei es Wasser, Öl, Diesel, Kraftstoff oder andere Kraftstoffe oder dergleichen, sowie der Dichtgeometrie. Dabei spielen die mögliche Fügerichtung, die Spaltbeziehungsweise Bautoleranzen und dergleichen mehr sowie die Anforderung des Fertigungsprozesses hinsichtlich der Taktung eine hervorgehobene Rolle.

Die Abdichtwirkung und die Isolationswirkung des Klebstoffes an der stoffschlüssigen Verbindung 50 beruht bei der Verklebung auf der stoffschlüssigen Verbindung der Fügepartner, d.h. des Materials der elektrischen Kontaktierungen 32 und des Materials der Begrenzungswand der Durchführung 34 in der Magnethülse 16. Alternativ zur Ausgestaltung der elektrischen Kontaktelemente als relativ starre Kontaktierungspins, können auch labile Folien oder auch Kabel und dergleichen, die eine verringerte Formstabilität im Vergleich zu Kontaktierungspins aufweisen, eingesetzt werden. Zur Abdichtung ist kein Anpressen des Dichtelementes, d.h. im vorliegenden Falle der Klebstoffmasse, auf die Fügepartner notwendig. Eine Relaxation des Dichtelementes, d.h. der stoffschlüssigen Verbindung 50, bei Einsatz eines Klebstoffes entfällt. Der im Rahmen der stoffschlüssigen Verbindung 50 eingesetzte Klebstoff passt sich der Oberfläche der zu fügenden Partner an. Riefen oder ähnliche Unstetigkeiten werden beim blasenfreien Verfüllen des Spaltes zwischen den elektrischen Kontaktelementen 32 und dem Material der Begrenzungswand der Durchführung 34 verfüllt. Die sich vom Innen- zum Außenraum erstreckenden Rillen stellen gerade beim Einsatz der in Figur 1 dargestellten O-Ringe 24 zur Herbeiführung einer Abdichtung ein Problem dar, da sie kritische Leckagepfade bilden. Durch die erfindungsgemäß vorgeschlagene Lösung des Einbringens eines eine stoffschlüssige Verbindung 50 realisierenden Klebemediums können die Anforderungen an die Oberflächenbeschaffenheit der Dichtflächen reduziert werden, was eine weitere Kostenersparnis mit sich bringt.

Bei der erfindungsgemäß vorgeschlagenen Lösung wird durch die Abdichtung mittels der stoffschlüssigen Verbindung 50 durch Verklebung nur ein minimaler radialer Spalt von ca. 150 µm benötigt, so dass der Durchmesser der Durchgangsbohrungen, d.h. der Durchführungen 34, im Vergleich zu den bisherigen Lösungen kleiner gewählt werden kann und in dem bereits erwähnten reduzierten Durchmesser 60 ausgeführt werden kann. Für den Kraftstoffinjektor hat dies zur Folge, dass der Bauraum reduziert wird sowie die Festigkeit des Injektorkörpers weniger stark herabgesetzt wird. Des Weiteren können ineinander verlaufende verschränkte Bohrungen leichter umgesetzt werden, da der erfindungsgemäß vorgeschlagenen Lösung folgend, aufgrund der geringeren Dimensionierung der Durchführungen 34 der Freiheitsgrad hinsichtlich der Auswahl der Verschränkungswinkel erhöht werden kann, was einerseits einen fertigungstechnischen Vorteil darstellt und andererseits die Hochdruckfestigkeit des erfindungsgemäß vorgeschlagenen Kraftstoffinjektors erhöht. Dies findet seine Ursache darin, dass verbleibende Wanddicken zwischen den verschränkten Bohrungen innerhalb des Injektorkörpers dicker ausgeführt werden können, wodurch sich eine Verbesserung der Hochdruckfestigkeit ergibt.

Die Klebschichtdicke, die Klebelänge sowie die Oberfläche der miteinander zu fügenden Partner, d.h. des Materials der Durchführungen 34 und der Mantelfläche der elektrischen Kontaktierungen, ermöglicht ein vergleichsweise einfaches Anpassen der stoffschlüssigen Verbindung 50 an geänderte Druckverhältnisse. Damit ist es möglich, die stoffschlüssige Verbindung 50, die mittels des Klebstoffs dargestellt wird, sowohl im Niederdruckbereich als auch im Hochdruckbereich eines Kraftstoffinjektors einzusetzen.

Anstelle der in Figur 2 dargestellten, als Kontaktierungspins ausgebildeten elektrischen Kontaktelemente 32 können auch formlabile elektrische Kontaktelemente 32, wie zum Beispiel Kabel oder Drähte, eingesetzt werden. Des Weiteren kann statt einer bisher ausgeführten axialen Ausrichtung der Durchführung 34 eine radiale Orientierung derselben erfolgen, was den konstruktiven und fertigungstechnischen Freiraum erheblich erhöht. Mit der erfindungsgemäß vorgeschlagenen Lösung kann die Durchführung 34 an die vorhandenen Freiräume angepasst und nicht das Injektordesign aufgrund der Anforderung der Durchführung 34 eingeschränkt werden. Durch die erfindungsgemäß vorgeschlagene Lösung lässt sich eine Reduzierung der Teileanzahl, eine vereinfachte Ausbildung der Durchführung 34 hinsichtlich deren Geometrie (vergleiche insbesondere der reduzierte Durchmesser 60) und die Oberflächengüte erreichen. Des Weiteren kann bei Einsatz der erfindungsgemäß vorgeschlagenen Lösung eine Minimierung der zur Montage notwendigen Prozessschritte erzielt werden, was die Produktkosten weiter in günstiger Weise beeinflusst.

Figur 2 ist des Weiteren zu entnehmen, dass die in dieser Ausführungsform dargestellten, als Kontaktierungspins ausgebildeten elektrischen Kontaktelemente 32 Steckerfahnen 64 von Flachsteckern 62 kontaktieren. Die als Kontaktierungspins ausgebildeten elektrischen Kontaktelemente 32 verlaufen im Wesentlichen parallel zur Injektorachse 14. Anstelle der in Figur 2 dargestellten, als Kontaktierungspins ausgebildeten elektrischen Kontaktelemente 32 können auch formlabile elektrische Kontaktelemente 32 wie zum Beispiel Kabel oder Drähte, die eine geringere Steifigkeit aufweisen, zur Kontaktierung der Magnetspule 26, die innerhalb des Magnetkerns 28 eingebettet ist, eingesetzt werden.

Figur 2 zeigt des Weiteren, dass der Deckel 18 mittels des Rastringes 22 in der Ringnut 20 der Magnethülse 16 formschlüssig befestigt ist. Die Magnethülse 16 ihrerseits wird durch einen Übergriff 74, der oberhalb eines Bundes 72 an der Mantelfläche 70 der Magnethülse 16 angreift, fixiert. Figur 2 zeigt des Weiteren, dass an einer Anlagefläche 68 auf der Innenseite der Magnethülse 16 der Magnetbaugruppe 10 der Außenumfang des Magnetkerns 28 anliegt, in welchen die Magnetspule 26 mit ihrer Vielzahl von Wicklungsdrähten 30 eingebettet ist.

Figur 3 zeigt eine perspektivische Ansicht der in Figur 2 im Schnitt dargestellten Magnetbaugruppe, die insbesondere zur Betätigung eines Kraftstoffinjektors eingesetzt wird.

Der perspektivischen Darstellung gemäß Figur 3 ist zu entnehmen, dass das Gehäuse 12, 16 der erfindungsgemäß vorgeschlagenen Magnetbaugruppe 10 oberhalb des Magnetkerns 28, in welchen die Magnetspule 26 eingebettet ist, eine Rücklauföffnung 66 aufweist. Über die Rücklauföffnung 66 strömt Steuermenge, d.h. aus einem Steuerraum abgesteuerter Kraftstoff, der bei Betätigung des Einspritzventilgliedes aus dem Steuerraum abgesteuert wird, einem in der Darstellung gemäß der Figuren 2 und 3 nicht näher dargestellten niederdruckseitigen Rücklauf zu.

Figur 3 zeigt des Weiteren, dass über eine Stirnseite 54 der Magnethülse 16 die hier als Kontaktierungspins ausgebildeten elektrischen Kontaktelemente 32 in einem Überstand 52 hervorstehen. Innerhalb des Überstandes 52 werden die in der Ausführungsform gemäß Figur 3 als Kontaktierungspins ausgebildeten elektrischen Kontaktelemente 32 von Flachsteckern 62 mit Steckerfahnen 64 (vergleiche Darstellung gemäß Figur 2) elektrisch kontaktiert. Figur 3 zeigt, dass der Magnetkern 28, in den die Magnetspule 26 eingebettet ist, an einer Anlagefläche 68 an der Innenseite der Magnethülse 16 anliegt und in diese eingeklebt ist. Die Mantelfläche 68 der Magnethülse 16 weist den bereits in Zusammenhang mit Figur 2 erläuterten Bund 72 auf, der von einem Übergriff 74 (vergleiche Darstellung gemäß Figur 2) übergriffen wird. Durch den Übergriff 74 gemäß der Darstellung in Figur 2 wird die Magnethülse 16 der Magnetbaugruppe 10 auf dem Injektorkörper eines in den Darstellungen gemäß der Figuren 2 und 3 nicht näher dargestellten Kraftstoffinjektors fixiert.

Der Darstellung gemäß Figur 3 ist des Weiteren zu entnehmen, dass die in dieser Ausführungsform als Kontaktierungspins ausgebildeten elektrischen Kontaktelemente 32 Durchführungen 34 der Magnethülse 16 durchsetzen. Die Durchführungen 34 sind in einem reduzierten Durchmesser 60 gefertigt. Der Spalt, der sich in radialer Richtung zwischen der Innenwand der Durchführung 34 mit reduziertem Durchmesser 60 und der Außenumfangsfläche der in Figur 3 dargestellten, bevorzugt als Kontaktierungspins ausgebildeten elektrischen Kontaktelemente 32 ergibt, wird im Rahmen einer stoffschlüssigen Verbindung 50 mit einem Klebmedium oder einem Klebstoff verfüllt. Die stoffschlüssige Verbindung 50 zwischen der Außenumfangsfläche der als Kontaktierungspins ausgebildeten elektrischen Kontakte 32 und der inneren Begrenzung der Durchführungen 34 stellt eine Abdichtung dar. Diese Abdichtung gleicht Oberflächenrauigkeiten zwischen den miteinander zu fügenden Fügepartnern, im vorliegenden Falle der Mantelfläche der als Kontaktierungspins ausgebildeten elektrischen Kontaktelemente und der Innenseite der Durchführungen 34 in der Magnethülse 16, aus.

Des Weiteren dient die stoffschlüssige Verbindung 50, die durch einen viskosen Klebstoff, vorkonfektionierte Klebebänder oder auch durch Aufschmelzen der Klebstoffe dargestellt werden kann, als Abdichtung zwischen dem niederdruckseitigen und dem hochdruckseitigen Bereich eines Kraftstoffinjektors.

Figur 3 ist zu entnehmen, dass die in dieser Ausführungsform als Kontaktierungspins ausgebildeten elektrischen Kontaktelemente 32 über die Stirnseite 54 der Magnethülse 16 um einen Überstand 52 hervorstehen. Innerhalb dieses durch den Überstand 52 gebildeten Bereiches der als Kontaktierungspins ausgebildeten elektrischen Kontaktelemente 32 werden die in der Darstellung gemäß Figur 2 dargestellten Flachstecker 62 mit Steckerfahnen 64 aufgebracht. Damit besteht eine elektrische Verbindung zwischen der im Magnetkern 28 aufgenommenen Magnetspule 26 über die elektrischen Kontaktelemente 32. Diese können - wie in den Figuren 2 und 3 dargestellt - als Pins ausgebildet sein, die sich parallel zur Achse 14 der Magnetbaugruppe 10 erstrecken. Daneben ist die Ausführung der elektrischen Kontaktelemente 32 als formlabile Kabel oder Flexfolien möglich. In den Darstellungen gemäß der Figuren 2 und 3 erstrecken sich die elektrischen Kontakte 32 - ausgeführt als Kontaktierungspins - parallel zur Achse 14 der Magnetbaugruppe 10 in axialer Richtung. In einer anderen Ausführungsmöglichkeit können die elektrischen Kontaktelemente 32, seien es Kontaktierungspins, seien es formlabile Kabel, Drähte oder Flexfolien oder dergleichen, in radialer Richtung verlaufend in die Magnethülse 16 eingebracht sein und die Magnetspule 26 in radialer Richtung kontaktieren.

Wie aus der Darstellung gemäß Figur 3 des Weiteren hervorgeht, verlaufen die als Kontaktierungspins ausgebildeten elektrischen Kontaktelemente 32 durch Durchgangsbohrungen in der Magnethülse 16. Die Durchgangsbohrungen sind in einem im Vergleich zur Darstellung gemäß Figur 1 reduzierten Durchmesser 60 ausgeführt. Der reduzierte Durchmesser 60 ermöglicht eine massivere Bauweise des Gehäuses 16, d.h. der Magnethülse der Magnetbaugruppe 10.

Durch die aus viskosern Klebstoff, aufschmelzendem Klebstoff oder aus vorkonfektionierten Klebebändern beschaffene stoffschlüssige Verbindung 50 kann eine sichere Abdichtung erzielt werden. Die Abdichtung über die stoffschlüssige Verbindung 50, die als Verklebung ausgebildet ist, erfordert kein Anpressen des "Dichtelementes" auf die Fügepartner 32, 34. Das "Dichtelement" ist in der erfindungsgemäßen Lösung durch die Klebstoffmasse gebildet. Diese vermeidet eine Minimierung der Dichtwirkung aufgrund einer Relaxation des Dichtelementes über deren Lebenszeit, wie dies zum Beispiel bei O-Ringen 24 auftreten kann. Des Weiteren ermöglicht es die stoffschlüssige Verbindung 50, d.h. der Klebstoff, eine Anpassung an die Oberfläche der miteinander zu fügenden Fügepartner, im vorliegenden Falle der elektrischen Kontaktelemente 32 mit der Begrenzung der Durchführungen 34. Riefen oder ähnliche Unstetigkeiten werden durch die Klebstoffmasse verfüllt. Rillen, die sich vom Innenraum zum Außenraum hin erstrecken und gerade bei O-Ring-Abdichtungen Probleme bereiten, stellen keinen kritischen Leckagepfad mehr dar. Als Folge daraus kann die Oberflächenbeschaffenheit der miteinander zu fügenden Oberflächen, d.h. der Dichtflächen, reduziert werden. Durch Anpassen der Klebschichtdicke, der Klebelänge und der Oberfläche der miteinander zu fügenden Partner, d.h. der Begrenzung der Durchführung 34 und der Mantelfläche der elektrischen Kontaktelemente 32, kann das Dichtelement, d.h. die stoffschlüssige Verbindung 50, geänderten Druckverhältnissen angepasst werden. Somit bietet sich die Möglichkeit, die erfindungsgemäß vorgeschlagene stoffschlüssige Verbindung 50 auf der Niederdruck- als auch auf der Hochdruckseite eines Kraftstoffinjektors einzusetzen.

Der Darstellung gemäß Figur 3 ist überdies zu entnehmen, dass sich durch die Magnethülse 16 ein niederdruckseitiger Rücklauf 66 erstreckt, über den abgesteuerte Steuermenge aus einem Steuerraum eines Kraftstoffinjektors dem niederdruckseitigen Rücklaufbereich eines Kraftstoffeinspritzsystems zugeführt wird. Figur 3 zeigt des Weiteren, dass der Magnetkern 28, in den die Magnetspule 26 eingelassen ist, an einer Anlagefläche 68 an der Innenseite der Magnethülse 16 anliegt. Auf der Mantelfläche 70 der Magnethülse 16 befindet sich sowohl die Ringnut 20, an welcher der Rastring 22 des Deckels 18 der Magnetbaugruppe 10 verrastet wird, als auch der umlaufende Bund 72, der, wie in der Darstellung gemäß Figur 2 angedeutet wird, die Befestigung der Magnethülse 16 am Injektorkörper des Kraftstoffinjektors ermöglicht.

## Patentansprüche

1. Magnetbaugruppe (10) eines Magnetventils, insbesondere zur Betätigung eines Kraftstoffinjektors mit einem Gehäuse (12, 16), das einen Magnetkern (28) mit Magnetspule (26) aufnimmt, mit elektrischen Kontaktelementen (32), welche durch Durchführungen (34) aus dem Gehäuse (12, 16) geführt sind, wobei die elektrischen Kontaktelemente (32) im Gehäuse (12, 16) mit einer stoffschlüssigen Verbindung (50) fixiert sind, **dadurch gekennzeichnet, dass** die stoffschlüssige Verbindung (50) als Verklebung ausgeführt ist, die eine Abdichtung eines insbesondere mit Kraftstoff befüllten Bereiches eines Kraftstoffinjektors darstellt.

2. Magnetbaugruppe (10) gemäß Anspruch 1, **dadurch gekennzeichnet, dass** die elektrischen Kontaktelemente (32) als Kontaktpins, Kabel, Flexfolie oder Drähte ausgeführt sind, deren jeweilige Mantelflächen einen der Fügepartner der stoffschlüssigen Verbindung (50) darstellen.

3. Magnetbaugruppe (10) gemäß Anspruch 1, **dadurch gekennzeichnet, dass** eine Begrenzung mindestens einer Durchführung (34) des Gehäuses (12, 16) einen Fügepartner der stoffschlüssigen Verbindung (50) darstellt.

4. Magnetbaugruppe (10) gemäß Anspruch 1, **dadurch gekennzeichnet, dass** sich die elektrischen Kontaktelemente (32) parallel oder senkrecht zur Achse (14) der Magnetbaugruppe (10) erstrecken.

5. Magnetbaugruppe (10) gemäß Anspruch 1, **dadurch gekennzeichnet, dass** die stoffschlüssige Verbindung (50) einen Spalt zwischen dem elektrischen Kontaktelement (32) und der mindestens einen Durchführung (34) verfüllt.

6. Magnetbaugruppe (10) gemäß Anspruch 1, **dadurch gekennzeichnet, dass** die Verklebung (50) durch einen viskosen Klebstoff, durch einen aufschmelzenden Klebstoff oder vorkonfektionierte Klebebänder dargestellt ist, die nach Herstellung der stoffschlüssigen Verbindung (50) aushärten.

7. Magnetbaugruppe (10) gemäß Anspruch 1, **dadurch gekennzeichnet, dass** die Durchführungen (34) als Durchgangsbohrungen mit reduziertem Durchmesser (60) im Gehäuse (12, 16) ausgeführt sind.

8. Magnetbaugruppe (10) gemäß Anspruch 1, **dadurch gekennzeichnet, dass** die stoffschlüssige Verbindung (50) eine Abdichtung zwischen einem Niederdruckbereich und einem Hochdruckbereich eines Kraftstoffinjektors darstellt.

9. Magnetbaugruppe (10) gemäß Anspruch 1, **dadurch gekennzeichnet, dass** durch die stoffschlüssige Verbindung (50) zwischen den elektrischen Kontaktelementen (32) und dem Material der Durchführung (34) Oberflächenunstetigkeiten der Fügepartner (32, 23) verfüllt und Leckagepfade verschlossen sind.

## Claims

1. Magnet assembly (10) of a solenoid valve, in particular for actuating a fuel injector, with a housing (12, 16), which receives a magnet core (28) with a magnet coil (26), with electrical contact elements (32), which are led out of the housing (12, 16) through lead-throughs (34), the electrical contact elements (32) being fixed in the housing (12, 16) by a material-bonding connection (50), **characterized in that** the material-bonding connection (50) takes the form of adhesive bonding, which represents sealing of a region of a fuel injector, particularly a region filled with fuel.

2. Magnet assembly (10) according to Claim 1, **characterized in that** the electrical contact elements (32) take the form of contact pins, cables, flexible film or wires, the respective lateral surfaces of which represent one of the elements joined in the material-bonding connection (50).

3. Magnet assembly (10) according to Claim 1, **characterized in that** a delimitation of at least one lead-through (34) of the housing (12, 16) represents an element joined in the material-bonding connection (50).

4. Magnet assembly (10) according to Claim 1, **characterized in that** the electrical contact elements (32) extend parallel or perpendicular to the axis (14) of the magnet assembly (10).

5. Magnet assembly (10) according to Claim 1, **characterized in that** the material-bonding connection (50) fills a gap between the electrical contact element (32) and the at least one lead-through (34).

6. Magnet assembly (10) according to Claim 1, **characterized in that** the adhesive bonding (50) is represented by a viscous adhesive, a melting adhesive or prefabricated adhesive tapes, which harden after the material-bonding connection (50) has been established.

7. Magnet assembly (10) according to Claim 1, **characterized in that** the lead-throughs (34) take the form of through-holes of reduced diameter (60) in the housing (12, 16).

8. Magnet assembly (10) according to Claim 1, **characterized in that** the material-bonding connection (50) represents sealing between a low-pressure region and a high-pressure region of a fuel injector.

9. Magnet assembly (10) according to Claim 1, **characterized in that** the material-bonding connection (50) between the electrical contact elements (32) and the material of the lead-through (34) has the effect of filling surface irregularities of the elements joined (32, 23) and closing leakage paths.

## Revendications

1. Module magnétique (10) pour soupape magnétique, en particulier pour l'actionnement d'un injecteur de carburant, présentant
un boîtier (12, 16) qui loge un noyau magnétique (28) doté d'une bobine magnétique (26),
des éléments (32) de contact électrique qui traversent le boîtier (12, 16) par des passages (34),
les éléments (32) de contact électrique étant fixés dans le boîtier (12, 16) par une liaison (50) en correspondance de matière,
**caractérisé en ce que**
la liaison (50) en correspondance de matière est réalisée sous la forme d'un collage qui assure l'étanchéité d'une partie, en particulier remplie de carburant, d'un injecteur de carburant.

2. Module magnétique (10) selon la revendication 1, **caractérisé en ce que** les éléments (32) de contact électrique sont configurés sous la forme de tiges de contact, de câbles, d'une feuille flexible ou de fils dont les surfaces d'enveloppe respectives constituent l'un des partenaires de jonction de la liaison (50) en correspondance de matière.

3. Module magnétique (10) selon la revendication 1, **caractérisé en ce qu'**une frontière d'au moins un passage (34) du boîtier (12, 16) constitue l'un des partenaires de jonction de la liaison (50) en correspondance de matière.

4. Module magnétique (10) selon la revendication 1, **caractérisé en ce que** les éléments (32) de contact électrique s'étendent parallèlement ou perpendiculairement à l'axe (14) du module magnétique (10).

5. Module magnétique (10) selon la revendication 1, **caractérisé en ce que** la liaison (50) en correspondance de matière remplit un interstice entre l'élément (32) de contact électrique et le ou les passages (34).

6. Module magnétique (10) selon la revendication 1, **caractérisé en ce que** le collage (50) est réalisé par un adhésif visqueux, un adhésif fusible ou un ruban adhésif préconditionné qui durcissent après l'établissement de la liaison (50) en correspondance de matière.

7. Module magnétique (10) selon la revendication 1, **caractérisé en ce que** les passages (34) sont configurés sous la forme d'alésages de passage de diamètre (60) réduit prévus dans le boîtier (12, 16).

8. Module magnétique (10) selon la revendication 1, **caractérisé en ce que** la liaison (50) en correspondance de matière forme une étanchéité entre une partie à basse pression et une partie à haute pression d'un injecteur de carburant.

9. Module magnétique (10) selon la revendication 1, **caractérisé en ce que** la liaison (50) en correspondance de matière entre les éléments (32) de contact électrique et le matériau du passage (34) permet de remplir les irrégularités de surface des partenaires de jonction (32, 23) et de fermer les parcours de fuite.
